# EUROPÄISCHE PATENTSCHRIFT

(11) **EP 0 783 740 B1**
(45) Veröffentlichungstag und Bekanntmachung des Hinweises auf die Patenterteilung: **25.10.2000**
(21) Anmeldenummer: 96918809.3
(22) Anmeldetag: 08.07.1996
(51) Int. Cl.: G07C 9/00, G06K 7/08

(54) **DATENÜBERTRAGUNGSSYSTEM ZWISCHEN MINDESTENS EINER SCHREIB-LESE-STATION UND MEHREREN DATENTRÄGERN**
DATA TRANSMISSION SYSTEM BETWEEN AT LEAST ONE WRITE-READ STATION AND SEVERAL DATA CARRIERS
SYSTEME DE TRANSMISSION DE DONNEES ENTRE AU MOINS UNE STATION D'ECRITURE ET DE LECTURE ET PLUSIEURS SUPPORTS DE DONNEES

(30) Priorität: 18.07.1995 AT 122595
(43) Veröffentlichungstag der Anmeldung: 16.07.1997
(73) Patentinhaber: Koninklijke Philips Electronics N.V., 5621 BA Eindhoven (NL)
(72) Erfinder: BÜHRLEN, Martin, 8256 Groszsteinbach (AT); ARNOLD, Siegfried, 8052 Graz (AT)
(74) Vertreter: Peters, Carl Heinrich, Dipl.-Ing.
(86) Internationale Anmeldenummer: IB9600656
(87) Internationale Veröffentlichungsnummer: WO9704422

(56) Entgegenhaltungen:
- EP-A- 0 372 285
- WO-A-90/14484
- WO-A-90/15211
- WO-A-94/23164
- US-A- 5 361 062

## Beschreibung

Die vorliegende Erfindung betrifft ein Datenübertragungssystem zwischen mindestens einer Schreib-Lese-Station und mehreren Datenträgern bei dem durch induktive Kopplung zwischen Schreib-Lese-Station und Datenträger Energie und Takt zum Datenträger sowie Daten vom Datenträger zur Schreib-Lese-Station übertragen werden.

Datenträger dienen als intelligente mobile Datenspeicher, die im Nahfeld von Schreib-Lese-Stationen zum Beschreiben oder Auslesen von Daten in Betrieb gesetzt werden. Derartige Systeme werden in unterschiedlichster Ausführung bezüglich Übertragungsreichweite, Datenübertragungsgeschwindigkeit, Integrationsgrad, Speicherkapazität, Intelligenz der Datenträger usw. in verschiedensten Applikationen wie Zutrittskontrolle, industrielle und kommerzielle Objektidentifikation, Tieridentifikationen, Wegfahrsperren, automatische Fahrkartenkontrolle usw. eingesetzt.

Ein Datenübertragungssystem der eingangs genannten Art ist aus dem Österreichischen Patent Nr. 395.224 bekannt. Bei diesem Datenübertragungssystem sendet die Schreib-Lese-Station ein HF-Signal aus. Durch Gleichrichten dieses HF-Signals wird im Datenträger die Betriebsspannung erzeugt. Außerdem wird aus dem HF-Signal der Takt abgeleitet, beispielsweise durch Frequenzteilung. Zur Übertragung von Daten vom Datenträger zur Schreib-Lese-Station wird die Belastungsmodulation verwendet: im Datenträger wird die Antennenspule oder ein Teil davon kurzgeschlossen oder mit einem Widerstand belastet, um z.B. eine "1" zu übertragen, und bleibt unbelastet, um eine "0" zu übertragen. Diese Belastungen können in der Schreib-Lese-Station erkannt und ausgewertet werden.

Höchsten Verbreitungsgrad in verschiedensten Anwendungen haben gegenwärtig Fixcode-Datenträger gefunden, da sie technisch wenig aufwendig und daher zu äußerst niedrigen Herstellungskosten produziert werden können. Bei Fixcode-Datenträgern werden keine Daten von der Schreib-Lese-Station zum Datenträger übertragen. Es wird im Herstellverfahren ein festes (meist zwischen 32 und 256 Bit langes) Codewort manipulationssicher abgespeichert (zum Beispiel durch Laserprogrammiertechniken).

Um bei schreib-/lesbaren Datenträgern Daten auch von der Schreib-Lese-Station zum Datenträger zu übertragen, kann Puls-/Pausenmodulation verwendet werden: das HF-Signal wird in bestimmten Abständen kurz unterbrochen, und die Zeit zwischen den Unterbrechungen wird herangezogen, um festzustellen, ob eine "0" oder eine "1" übertragen wird. Die Zeit kann im Datenträger einfach durch Zählen von Taktimpulsen ermittelt werden. Wenn zwischen zwei Unterbrechungen weiter als bis zu einer bestimmten Zahl gezählt wird, wurde eine "1" übertragen, sonst eine "0" (oder umgekehrt). Die übermittelten Daten werden z.B. in einem EEPROM-Speicher abgelegt.

Für bestimmte Anwendungen (Sicherheitstechnik, Zutrittskontrolle) dürfen nicht autorisierte Personen ("Angreifer") nicht in der Lage sein, einen Datenträger mithilfe eines Modells zu simulieren, da damit einem Systembetreiber erheblicher Schaden zugefügt werden kann.

Stand der Technik ist bei derzeitigen Systemen, daß die auf einem Datenträger gespeicherten Daten nicht in Klartext übertragen werden, sondern mithilfe von spezifischen Verschlüsselungseinrichtungen so manipuliert werden, daß eine Interpretation bzw. Simulation der Daten durch Angreifer nicht möglich ist. Es wird dabei von der Schreib-Lese-Station ein Schlüsselwort zum Datenträger gesendet, und abhängig von diesem erfolgt im Datenträger die Verschlüsselung und in der Schreib-Lese-Station die Entschlüsselung (WO-A-9 015 211).

Von Nachteil ist dabei, daß solche Verschlüsselungseinrichtungen, je nach erreichtem Sicherheitsstandard, nur mit verhältnismäßig großem Hardwareaufwand auf Datenträgerseite realisiert werden können, und zudem erfordern die bekannten Verschlüsselungsverfahren eine Datenübertragung in beiden Richtungen. Das bedeutet, daß der Datenträger auch dann einen Demodulator aufweisen muß, wenn bei einer bestimmten Anwendung (vom Schlüsselwort abgesehen) keine Daten zum Datenträger übertragen werden müssen. Dies sowie die Verschlüsselungsschaltung bringen natürlich einen relativ großen Aufwand und damit hohe Kosten bei der Herstellung der Datenträger mit sich.

Wird anderseits bei einer Anwendung, wo Daten auch von der Schreib-Lese-Station zum Datenträger übertragen werden, auch bei diesen Daten die Ver-bzw. Entschlüsselung der Daten angewendet, ist dabei nachteilig, daß ein Angreifer - bei Kenntnis des Verschlüsselungsverfahrens - die übertragenen Daten ermitteln kann, sofern er nur den starken HF-Träger der Schreib-Lese-Station empfangen kann.

Es ist nun Aufgabe der vorliegenden Erfindung, ein Datenübertragungssystem mithilfe einer einfach implementierbaren Zusatzeinrichtung in Bezug auf Manipulations- bzw. Spionagesicherheit zu verbessern. Gegenüber einfachen Fixcode- bzw. auch schreib-/lesbaren Daten trägern soll ein wesentlich erhöhter Sicherheitsstandard erreicht werden, ohne dabei aufwendige Verschlüsselungsfunktionen einsetzen zu müssen sodaß der Vorteil der kostengünstigen Herstellbarkeit erhalten bleibt; bei Anwendungen wo Daten von der Schreib-Lese-Staion zum Datenträger verschlüsselt übertragen werden, soll ein Entschlüsseln der Daten selbst bei Kenntnis des Verschlüsselungsverfahrens unmöglich gemacht werden, wenn nur das HF-Signal der Schreib-Lese-Station empfangen werden kann.

Diese Aufgaben werden bei einem Datenübertragungssystem der eingangs genannten Art erfindungsgemäß dadurch gelöst, daß der Datenträger einen Zufallszahlengenerator sowie einen Speicher für die erzeugte Zufallszahl aufweist.

Auf diese Weise ist es möglich, einen Speicher (oder einen Teil eines auch für andere Zwecke benützten Speichers) auf von außen unvorhersehbare Weise zu beschreiben. Die im Datenträger selbst erzeugte Zufallszahl kann für verschiedene Zwecke verwendet werden. Immer ist es jedoch vorteilhaft, daß die Zufallszahl nicht von der Schreib-Lese-Station zum Datenträger gesendet werden muß: Die Übertragung von Daten vom Datenträger zur Schreib-Lese-Station findet bei passiven Datenträgern auf sehr geringem Energieniveau statt (ein Abhören von Daten, die der Datenträger sendet, ist je nach geometrischen Abmessungen nur über wenige Zentimeter bis maximal 1 m möglich). Werden hingegen Daten von der Schreib-Lese-Station zum Datenträger übertragen, so geschieht dies auf einem vergleichsweise sehr hohen Niveau. (Die Geometrien der Sendeantenne sind häufig 2 bis 3 mal größer als die Geometrien der Datenträgerantenne, zudem ist die Sendeleistung um den Faktor 10 bis 100 größer, da die Schreib-Lese-Station die Datenübertragung auf gleichem Energieniveau durchführt wie die Energieübertragung zum Datenträger.) Somit kann die Zufallszahl nicht unbemerkt abgehört werden.

Eine mögliche Verwendung der Zufallszahlen besteht darin daß der Code des Datenträgers die im Speicher abgelegte Zufallszahl enthält oder aus ihr besteht. Auf diese Weise ergeben sich Datenträger mit änderbarem Code. Besonders vorteilhaft ist dabei, daß der neue Code niemals von der Schreib-Lese-Station zum Datenträger übertragen werden muß; andernfalls wäre der Vorteil, daß ein Code nur begrenzte Zeit gilt, durch den erheblichen Nachteil erkauft, daß der neue Code in einer sehr großen Umgebung abgehört werden kann und dadurch Codes sogar leichter ermittelt werden können als wenn sie unveränderlich wären.

Es ist zweckmäßig, wenn zur Änderung des Codes des Datenträgers zunächst der alte Code und dann der neue Code vom Datenträger zur Schreib-Lese-Station gesendet werden, wobei in der Schreib-Lese-Station der alte Code auf Gültigkeit geprüft wird und nur bei positivem Ausgang der Prüfung der neue Code in der Schreib-Lese-Station als derzeit gültiger Code gespeichert wird. Auf diese Weise wird z.B. bei einem Zutrittskontrollsystem verhindert, daß bei einem Codewechsel ein Angreifer mit einem beliebigen Code Zutritt bekommt.

Bei anderen Anwendungen kann es aber auch zweckmäßig sein, daß bei Änderung des Codes die Zufallszahl nur im Speicher abgelegt wird und erstmals an einem anderen Ort übertragen wird. Dies kann bei Sport-Großveranstaltungen zweckmäßig sein, wie es z.B. der Wiener Frühjahrsmarathon ist. Wenn ein mit einem Datenträger versehener Läufer den Start passiert, kommt er an einer Schreib-Lese-Station vorbei und überträgt den alten Code. Dann wird der Code geändert, jedoch nicht gesendet. Am Umkehrpunkt wird dann der neue Code an eine andere Schreib-Lese-Station gesendet. Nach Beendigung der Sportveranstaltung wird kontrolliert, ob der Datenträger des Läufers tatsächlich diesen Code aussendet. Damit ist es unmöglich, daß ein Komplize des Läufers durch Abhören beim Start den Code ermittelt und beim Umkehrpunkt zur Schreib-Lese-Station übermittelt, während der Läufer selbst zu früh umdreht. In diesem Fall wird man zweckmäßigerweise als Code nicht nur die Zufallszahl verwenden, sondern eine Kombination von Fixcode und Zufallzahl, um stets eine eindeutige Zuordnung von Code und Läufer zu haben.

Eine andere Verwendung der Zufallszahlen besteht darin, daß zur verschlüsselten Übertragung von Daten von der Schreib-Lese-Station zum Datenträger die Schreib-Lese-Station eine Verschlüsselungsschaltung und der Datenträger eine Entschlüsselungsschaltung aufweist, wobei eine im Datenträger vom Zufallszahlengenerator erzeugte und zur Schreib-Lese-Station übertragene Zufallszahl das Schlüsselwort bildet. Auf diese Weise ist selbst bei genauer Kenntnis des Verschlüsselungsverfahrens eine Entschlüsselung lediglich durch Abhören des HF-Signals der Schreib-Lese-Station unmöglich, man muß vielmehr auch die Signale des Datenträgers empfangen, was aber nur in unmittelbarer räumlicher Nähe möglich ist.

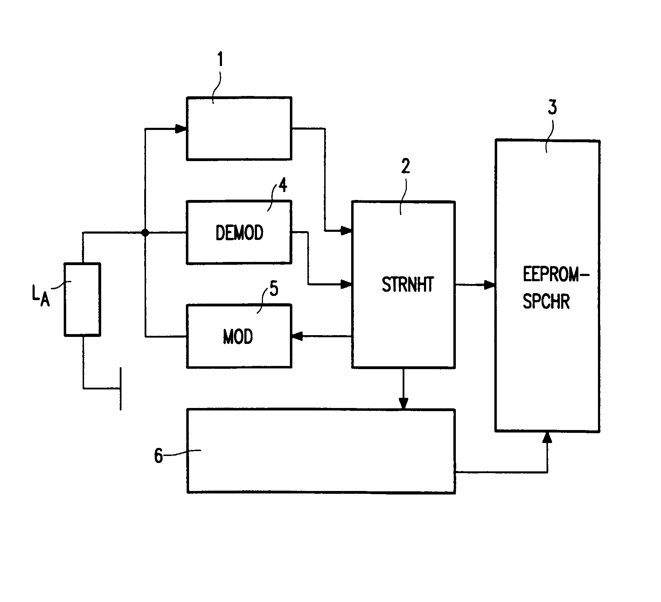

Anhand der beiliegenden Zeichnung wird die Erfindung näher erläutert. Die einzige Abbildung zeigt das Prinzipschaltbild eines erfindungsgemäßen Datenträgers. Er weist eine Antennenspule L_{A} auf, die ein von einer Schreib-Lese-Station ausgesendetes HF-Signal empfängt. Das HF-Signal wird von einem nicht dargestellten Gleichrichter gleichgerichtet; die sich ergebende Gleichspannung dient nach entsprechender Aufbereitung (Glättung, Spannungsbegrenzung) als Betriebsspannung. Weiters ist in üblicher Weise eine Steuerschaltung 2 vorgesehen, die mit einem Speicher 3, z.B. einem EEPROM-Speicher, zusammenarbeitet. Die Steuereinheit 2 kann über einen Modulator 5 Daten aussenden und über einen Demodulator 4 Daten empfangen. Ein Takterzeuger 1 leitet ein Taktsignal aus dem empfangenen HF-Signal durch Frequenzteilung ab.

Der Datenträger sendet entweder immer, wenn er in ein HF-Feld einer Schreib-Lese-Station kommt, seinen im Speicher abgelegten Code aus, oder aber nur dann, wenn er einen entspre-chenden Befehl von der Schreib-Lese-Station erhält.

Zusätzlich zu diesen bekannten Komponenten ist im Datenträger ein Zufallszahlengenerator 6 vorgesehen. Er erzeugt auf Befehl der Steuereinheit 2 eine Zufallszahl und legt sie im Speicher 3 ab. Eine sehr einfach zu implementierende Möglichkeit für einen Zufallszahlengenerator wäre z.B. ein linear rückgekoppeltes Schieberegister, das von einem frei laufenden Oszillator getaktet wird. Dabei werden die verschiedenen Bits des Schieberegisters - gegebenenfalls über Inverter - durch eine XOR-Schaltung (XOR = exklusiv oder) miteinander verknüpft, und das Ergebnis wird dem Eingang des Schieberegisters zugeführt. Damit ergibt sich bei jedem Taktimpuls eine neue - allerdings vorhersehbare - Bitkombination (sogenannte Pseudozufallszahl) im Schieberegister. Wird das Schieberegister ständig - solange Betriebsspannung vorhanden ist - mit asynchronen Taktimpulsen versorgt, so ist der Inhalt des Schieberegisters aber von außen nicht mehr vorherzusehen.

Die auf Befehl der Steuereinheit 2 vom Zufallszahlengenerator 6 erzeugte und im Speicher 3 abgelegte Zufallszahl bildet einen Teil des vom Datenträger auszusendenden Codes.

Der Zeitpunkt, wann die Erzeugung der Zufallsdaten erfolgt, könnte z.B. durch ein spezielles Kommando von der Schreib-Lese-Station vorgegeben werden. Es ist jedoch auch denkbar, daß diese Zufallszahlenerzeugung automatisch und "festverdrahtet" durch die Steuerlogik durchgeführt wird, beispielsweise bei jeder Abfrage des Code oder bei jeder x-ten Abfrage. In letzterem Falle - ist wenn bei einer bestimmten Anwendung keine Daten zum Datenträger übertragen werden müssen - der Demodulator 4 entbehrlich. Wenn die Erzeugung einer Zufallszahl von der Schreib-Lese-Station ausgelöst wird, sonst aber keine Daten zum Datenträger übertragen werden müssen, kann der Demodulator 4 äußerst einfach aufgebaut sein. So kann die Schreib-Lese-Station beispielsweise das HF-Signal kurz unterbrechen, um die Erzeugung einer Zufallszahl auszulösen: der Demodulator 4 kann dann einfach eine Pausenerkennungsschaltung sein.

Der zusätzliche Schaltungsaufwand ist somit in jedem Fall gering. Dennoch kann ein erfindungsgemäßer Datenträger in einem sogenannten "Rolling Code"-Zutrittskontrollsystem eingesetzt werden. Dabei wird die Fälschungssicherheit dadurch erhöht, daß der Code jedes Datenträgers in zyklischen Abständen erneuert wird, womit einem Angreifer die Kenntnis eines bestimmten zutrittsberechtigten Codewortes nur über eine bestimmte Zeitspanne dienlich ist (im Gegensatz zu Fixcodesystemen).

Der Ablauf mit dem beschriebenen Datenträger wäre wie folgt:

Der Datenträger tritt ins Feld der Schreib-Lese-Station ein und sendet sein bisher gültiges Codewort, anschließend wird mit Hilfe des Zufallszahlengenerators ein neues Codewort erzeugt, das nun einerseits im Datenträger abgespeichert wird und andererseits ebenfalls zur Schreib-Lese-Station übertragen wird.

Die Schreib-Lese-Station überprüft nun das zuerst übertragene Codewort auf Gültigkeit und speichert im Falle eines positiven Ergebnisses (Datenträger ist zutrittsberechtigt) das zweite vom Datenträger übertragene Codewort als gültig ab.

Je nach Implementierung muß dabei die Schreib-Lese-Station keinen einzigen Befehl absetzen, um einen solchen Vorgang auszulösen. Dies hat neben der dadurch sehr einfachen Schaltungstechnik für Schreib-Lese-Station und Datenträger den sicherheitstechnisch sehr entscheidenden Vorteil, daß auch der neue Code nur vom Datenträger ausgesendet wird, niemals aber mit hoher Sendeleistung von der Schreib-Lese-Station; ein Abhören des Codes ist also genauso schwierig wie bei Fixcode-Datenträgern, d.h. nur in unmittelbarer räumlicher Nähe des Datenträgers möglich.

Im Gegensatz dazu könnte das oben genannte Verfahren, implementiert in ein konventionelles schreib-/lesbares Datenträgersystem, über sehr große Entfernungen abgehört werden, da das neue Codewort in der Schreib-Lese-Station generiert und dann über die gut abhörbare Kommunikationsstrecke von der Schreib-Lese-Station zum Datenträger übertragen werden müßte.

## Patentansprüche

1. Datenübertragungssystem zwischen mindestens einer Schreib-Lese-Station und mehreren Datenträgern, bei dem durch induktive Kopplung zwischen Schreib-Lese-Station und Datenträger Energie und Takt zum Datenträger sowie Daten vom Datenträger zur Schreib-Lese-Station übertragen werden, **dadurch gekennzeichnet**, daß der Datenträger einen Zufallszahlengenerator (6) sowie einen Speicher (3) für die erzeugte Zufallszahl aufweist.

2. Datenübertragungssystem nach Anspruch 1, **dadurch gekennzeichnet**, daß der Code des Datenträgers die im Speicher (3) abgelegte Zufallszahl enthält oder aus ihr besteht.

3. Datenübertragungssystem nach Anspruch 2, **dadurch gekennzeichnet**, daß zur Änderung des Codes des Datenträgers zunächst der alte Code und dann der neue Code vom Datenträger zur Schreib-Lese-Station gesendet werden, wobei in der Schreib-Lese-Station der alte Code auf Gültigkeit geprüft wird und nur bei positivem Ausgang der Prüfung der neue Code in der Schreib-Lese-Station als derzeit gültiger Code gespeichert wird.

4. Datenübertragungssystem nach Anspruch 2, **dadurch gekennzeichnet**, daß bei Änderung des Codes die Zufallszahl nur im Speicher (3) abgelegt wird und erstmals an einem anderen Ort übertragen wird.

5. Datenübertragungssystem nach Anspruch 1, **dadurch gekennzeichnet**, daß zur verschlüsselten Übertragung von Daten von der Schreib-Lese-Station zum Datenträger die Schreib-Lese-Station eine Verschlüsselungsschaltung und der Datenträger eine Entschlüsselungsschaltung aufweist, wobei eine im Datenträger vom Zufallszahlengenerator (6) erzeugte und zur Schreib-Lese--Station übertragene Zufallszahl das Schlüsselwort bildet.

## Claims

1. A system for the transmission of data between at least one write-read station and a plurality of data carriers, inductive coupling between write-read station and data carriers being used to transmit energy and clock signals to the data carrier as well as data from the data carrier to the write-read station, characterized in that the data carrier is provided with a random number generator (6) as well as with a memory (3) for storing the random number generated.

2. A data transmission system as claimed in Claim 1, characterized in that the code of the data carrier contains or consists of the random number stored in the memory (3).

3. A data transmission system as claimed in Claim 2, characterized in that in order to change the code of the data carrier, the data carrier first transmits the old code and then the new code to the write-read station, the validity of the old code being tested in the write/read station and the new code being stored in the write-read station as the valid code only if the test result is positive.

4. A data transmission system as claimed in Claim 2, characterized in that in the case of a change of the code the random number is only stored in the memory (3) and is transmitted for the first time in a different location.

5. A data transmission system as claimed in Claim 1, characterized in that for the encrypted transmission of data from the write-read station to the data carrier the write/read station includes an encryption circuit and the data carrier includes a decryption circuit, the keyword being formed by a random number which is generated by the random number generator (6) in the data carrier and transmitted to the write-read station.

## Revendications

1. Système de transmission de données entre au moins une station d'écriture et de lecture et plusieurs supports de données, de l'énergie et un rythme étant transmis vers le support de données ainsi que des données du support de données vers la station d'écriture et de lecture par couplage inductif entre la station d'écriture et de lecture et le support de données, **caractérisé en ce** que le support de données présente un générateur de nombres aléatoires (6) ainsi qu'une mémoire (3) pour le nombre aléatoire produit.

2. Système de transmission de données selon la revendication 1, **caractérisé en ce** que le code du support de données contient le nombre aléatoire enregistré dans la mémoire (3) ou se compose de celui-ci.

3. Système de transmission de données selon la revendication 2, **caractérisé en ce** que l'ancien code, d'abord, et le nouveau code, ensuite, sont transmis du support de données vers la station d'écriture et de lecture en vue de la modification du code du support de données, la validité de l'ancien code étant contrôlée dans la station d'écriture et de lecture et le nouveau code n'étant enregistré dans la station d'écriture et de lecture comme code actuellement en vigueur qu'en cas de résultat positif du contrôle.

4. Système de transmission de données selon la revendication 2, **caractérisé en ce** qu'en cas de modification du code, le nombre aléatoire est seulement mis en mémoire (3) et transmis pour la première fois à un autre endroit.

5. Système de transmission de données selon la revendication 1, **caractérisé en ce** qu'en cas de transmission codée des données de la station d'écriture et de lecture vers le support de données, la station d'écriture et de lecture présente un circuit de codage et le support de données un circuit de décodage, un nombre aléatoire produit dans le support de données par le générateur de nombres aléatoires (6) et transmis à la station d'écriture et de lecture formant le mot de code.
